# EUROPÄISCHE PATENTSCHRIFT

(11) **EP 0 626 000 B1**
(45) Veröffentlichungstag und Bekanntmachung des Hinweises auf die Patenterteilung: **14.02.1996**
(21) Anmeldenummer: 93903925.1
(22) Anmeldetag: 08.02.1993
(51) Int. Cl.: C09D 5/44

(54) **VERFAHREN ZUM LACKIEREN ELEKTRISCH LEITFÄHIGER SUBSTRATE, WÄSSRIGE ELEKTROTAUCHLACKE, VERFAHREN ZUR HERSTELLUNG EINER WÄSSRIGEN DISPERSION VERNETZTER POLYMERMIKROTEILCHEN UND NACH DIESEM VERFAHREN HERGESTELLTE DISPERSIONEN**
PROCESS FOR LACQUERING ELECTROCONDUCTIVE SUBSTRATES, AQUEOUS ELECTRO-DIPCOATS, PROCESS FOR PREPARING AN AQUEOUS DISPERSION OF CROSSLINKED POLYMER MICROPARTICULES AND DISPERSIONS PREPARED ACCORDING TO THIS PROCESS
PROCEDE DE LAQUAGE DE SUBSTRATS ELECTRO-CONDUCTEURS, LAQUES DE TREMPAGE ELECTROPHORETIQUE AQUEUSES, PROCEDE DE FABRICATION D'UNE DISPERSION AQUEUSE DE MICROPARTICULES POLYMERES RETICULEES ET DISPERSIONS REALISEES D'APRES LEDIT PROCEDE

(30) Priorität: 15.02.1992 DE 4204581
(43) Veröffentlichungstag der Anmeldung: 30.11.1994
(73) Patentinhaber: BASF Lacke + Farben AG, D-48165 Münster-Hiltrup (DE)
(72) Erfinder: OTT, Günther, D-4400 Münster (DE); REUTER, Hardy, D-4400 Münster (DE); JOUCK, Walter, D-4400 Münster (DE); PIONTEK, Susanne, D-4400 Münster (DE); HEIMANN, Ulrich, D-4400 Münster (DE); GILBERT, John, A., Beverly Hills, MI 48025 (US)
(74) Vertreter: Münch, Volker, Dr.
(86) Internationale Anmeldenummer: EP9300291
(87) Internationale Veröffentlichungsnummer: WO9316139

(56) Entgegenhaltungen:
- EP-A- 0 036 471
- EP-A- 0 296 494
- EP-A- 0 361 882

## Beschreibung

Die Erfindung betrifft ein Verfahren zum Lackieren elektrisch leitfähiger Substrate, bei dem
(1) das elektrisch leitfähige Substrat in einen wäßrigen Elektrotauchlack, der mindestens ein kathodisch abscheidbares Kunstharz und vernetzte Polymermikroteilchen enthält, getaucht wird
(2) das Substrat als Kathode geschaltet wird
(3) durch Gleichstrom ein Film auf dem Substrat abgeschieden wird
(4) das lackierte Substrat aus dem Elektrotauchlack entfernt wird und
(5) der abgeschiedene Lackfilm eingebrannt wird.

Die Erfindung betrifft auch wäßrige Elektrotauchlacke, ein Verfahren zur Herstellung einer wäßrigen Dispersion vernetzter Polymermikroteilchen und nach diesem Verfahren hergestellte Dispersionen.

Das oben beschriebene kathodische Elektrotauchlackierverfahren ist bekannt (vgl. z.B. Glasurit-Handbuch Lacke und Farben, Curt R. Vincentz Verlag, Hannover 1984, S. 374 - 384 und S. 457 - 462) und hat sich als Verfahren zur automatischen Lackierung von Massengütern wie z.B. Räder und insbesondere Automobilkarosserien durchgesetzt.

In der EP-A 259 181 wird ein kathodisches Elektrotauchlackierverfahren beschrieben, bei dem Elektrotauchlacke eingesetzt werden, die Polymermikroteilchen enthalten, die einen Erweichungspunkt, der mindestens 10°C über der Badtemperatur, einen Löslichkeitsparameter, der sich um nicht mehr als 1,0 vom Löslichkeitsparameter des kathodisch abscheidbaren Kunstharzes unterscheidet, einen Brechungsindex, der um 0,02 bis 0,3 vom Brechungsindex des kathodisch abscheidbaren Kunstharzes abweicht oder eine Vernetzungsdichte von 0,01 bis 5,05 mmol/g aufweisen. Bei den eingesetzten Polymermikroteilchen handelt es sich um Produkte, die durch Polymerisation von ethylenisch ungesättigten Verbindungen hergestellt werden. Die eingesetzten Polymermikroteilchen sollen insbesondere die Kantenabdeckung verbessern.

In der EP-A-433 783 wird ein kathodisches Elektrotauchlackierverfahren beschrieben, bei dem Elektrotauchlacke eingesetzt werden, die Polymermikroteilchen aus vernetzten Harnstoff-Aldehyd-, Triazin-Aldehyd- oder Phenol-Aldehyd-Harzen oder Polymerteilchen aus unvernetzten (Meth)-Acrylnitril Homo- oder Copolymeren enthalten. Auch hier sollen die eingesetzten Polymermikroteilchen die Kantenabdeckung verbessern.

Der Zusatz der in der EP-A 259 181 und EP-A-433 783 beschriebenen Polymermikroteilchen zu Elektrotauchlacken führt in manchen Fällen zu Verbesserungen der Kantenabdeckung. Trotz der verbesserten Kantenabdeckung ist die Korrosionsschutzwirkung der abgeschiedenen Elektrotauchlackfilme an der Kante unzureichend. Außerdem hat der Zusatz der in der EP-A-259 181 und EP-A-433 783 beschriebenen Polymermikroteilchen nachteiligerweise in vielen Fällen das Auftreten von Sedimentationen im Elektrotauchlack, eine Verschlechterung der Haftung zum Substrat und/oder zu überlackierten Lackschichten, eine starke Verschlechterung des Verlaufs sowie eine Herabsetzung der Korrosionsschutzwirkung der abgeschiedenen Elektrotauchlackfilme zur Folge.

Die der vorliegenden Erfindung zugrundeliegende Aufgabenstellung besteht in der Bereitstellung eines verbesserten kathodischen Elektrotauchlackierverfahrens. Dieses verbesserte Elektrotauchlackierverfahren soll insbesondere die Herstellung von Lackfilmen ermöglichen, die die Kanten des lackierten Substrats gut abdecken und die wenigstens einen Teil der oben beschriebenen Nachteile des Standes der Technik nicht bzw. nur in vermindertem Ausmaß zeigen.

Diese Aufgabe wird überraschenderweise durch ein kathodisches Elektrotauchlackierverfahren der oben beschriebenen Art gelöst, das dadurch gekennzeichnet ist, daß die im wäßrigen Elektrotauchlack enthaltenen vernetzten Polymermikroteilchen herstellbar sind, indem
(A) eine Verbindung, die pro Molekül durchschnittlich mehr als 1,0 Epoxidgruppen enthält oder eine Mischung aus solchen Verbindungen und
(B) eine Verbindung, die sowohl eine gegenüber Epoxidgruppen reaktive Gruppe als auch mindestens eine Ketimin- oder Aldimingruppe im Molekül enthält oder eine Mischung aus solchen Verbindungen
zu einem unvernetzten Zwischenprodukt (C), das pro Molekül durchschnittlich noch mindestens eine Epoxidgruppe enthält, umgesetzt werden und dieses Zwischenprodukt in Gegenwart einer Brönsted-Säure in einem wäßrigen Medium dispergiert wird.

In der US-A-4,017,438 werden unvernetzte Reaktionsprodukte aus Polyepoxiden und Polyaminderivaten, die eine sekundäre Aminogruppe und mindestens eine Ketimingruppe enthalten, beschrieben. Diese Reaktionsprodukte werden als Bindemittel in Elektrotauchlacken eingesetzt. Sie bewirken keine Verbesserung der Kantenabdeckung.

In der EP-A-351 141 werden vernetzte Polymermikroteilchen beschrieben, die auch in kathodisch abscheidbaren Elektrotauchlacken eingesetzt werden können. Die Polymermikroteilchen werden hergestellt, indem ein Kunstharz, das sowohl hydrophile als auch Selbstvernetzung ermöglichende Gruppen enthält, in einem wäßrigen Medium dispergiert wird und dann eine Vernetzung der dispergierten Polymermikroteilchen durchgeführt wird. Die erfindungsgemäß eingesetzten Polymermikroteilchen werden nicht beschrieben. Auch die der vorliegenden Erfindung zugrundeliegende Aufgabenstellung wird in der EP-A-351 141 nicht angesprochen. Eine Einarbeitung der in der EP-A-351 141 beschriebenen Polymermikroteilchen in kathodisch abscheidbare Elektrotauchlacke führt zu ähnlichen Problemen, wie der Zusatz der in der EP-A-259 181 und EP-A-433 783 beschriebenen Polymermikroteilchen.

In der EP-A-421 238 werden vernetzte Polymermikroteilchen beschrieben, die hergestellt werden, indem epoxidgruppenhaltige Verbindungen mit Polyaminen umgesetzt werden, wobei die Funktionalität der epoxidgruppenhaltigen Verbindung größer als eins und die Funktionalität der Polyamine größer als zwei sein soll. Die erfindungsgemäß eingesetzten Polymermikroteilchen werden nicht beschrieben. Die in der EP-A-421 238 beschriebenen vernetzten Polymermikroteilchen sollen als Ersatz für Weißpigmente, insbesondere Titandioxid, eingesetzt werden. Die der vorliegenden Erfindung zugrundeliegende Aufgabenstellung wird in der EP-A-421 238 nicht angesprochen. Eine Einarbeitung der in der EP-A-421 238 beschriebenen Polymermikroteilchen in kathodisch abscheidbare Elektrotauchlacke führt zu ähnlichen Problemen wie der Zusatz der in der EP-A-259 181 und EP-A-433 783 beschriebenen Polymermikroteilchen.

Die Herstellung der erfindungsgemäß eingesetzten Polymermikroteilchen ist einfach und gelingt problemlos. In einer ersten Stufe werden die Komponenten (A) und (B) zu einem unvernetzten Zwischenprodukt (C), das pro Molekül durchschnittlich noch mindestens eine Epoxidgruppe enthält, umgesetzt. Diese Umsetzung kann in Substanz oder vorzugsweise in organischen Lösemitteln, wie z.B. Aromaten, Alkoholen, Ketonen, Ether, Aliphaten und deren Mischungen durchgeführt werden. Das so erhaltene unvernetzte Zwischenprodukt wird in einer zweiten Stufe in Gegenwart eine Brönsted-Säure, wie z.B. Essigsäure, Milchsäure oder Ameisensäure in einem wäßrigen Medium dispergiert. Die Vernetzung der Teilchen erfolgt durch Reaktion der nach Spaltung der Ketimingruppen freigelegten primären Aminogruppen mit den Epoxidgruppen. Diese Reaktion läuft schon bei Raumtemperatur in befriedigender Geschwindigkeit ab. Sie kann selbstverständlich durch Erhöhung der Temperatur beschleunigt werden. Unter einem wäßrigen Medium wird Wasser, das gegebenenfalls auch noch organische Lösemittel enthalten kann, verstanden.

Als Komponente (A) kann im Prinzip jede Verbindung, die pro Molekül durchschnittlich mehr als 1,0 Epoxidgruppen enthält oder eine Mischung aus solchen Verbindungen eingesetzt werden.

Als Komponente (A) werden vorzugsweise Verbindungen eingesetzt, die pro Molekül durchschnittlich 1,5 bis 3,0 Epoxidgruppen enthalten.

Als Beispiele für einsetzbare (A) Komponenten werden aus Polyphenolen und Epihalohydrinen herstellbare Polyglycidylether, insbesondere Diglycidylether von Polyphenolen genannt. Als besonders bevorzugtes Polyphenol wird Bisphenol A genannt. Weitere geeignete Polyphenole sind Bisphenol F, Bis-(4-hydroxyphenyl)-1,1-ethan, Bis(4-hydroxyphenyl)-1,1-isobutan, Bis(-2-hydroxy-naphtyl)methan und 1,5 Dihydroxynaphtalin.

Als (A)-Komponente können auch Polyglycidylether von aliphatischen oder cycloaliphatischen Polyolen, wie z.B. Polyetherpolyolen (Polymethylenoxid, Polyethylenoxid, Polypropylenoxid, Poly(ethylenoxid-co-propylenoxid, Polytetramethylenoxid), Ethylenglykol, Diethylenglykol, Triethylenglykol, 1,2-Propylenglykol, 1,4-Propylenglykol, Dipropylenglykol, Tripropylenglykol, Pentandiol, Hexantriol, Glycerin und Bis-(4-hydroxycyclohexyl-)-2,2-propan eingesetzt werden.

Es können auch Polyglycidylester von Polycarbonsäuren, wie z.B. Oxalsäure, Bernsteinsäure, Glutarsäure, Terephthalsäure, 2,6-Naphthalindicarbonsäure und dimerisierte Linolsäure als Komponente (A) eingesetzt werden. Typische Beispiele sind Glycidyladipat und Glycidylphthalat.

Ferner sind als Komponente (A) auch Polyglycidylether von phenolischen Novolakharzen, Hydantoinepoxide und Polyepoxidverbindungen geeignet, die man durch Epoxidierung einer olefinisch ungesättigten Verbindung erhält.

Es ist auch möglich, als (A)-Komponente Verbindungen einzusetzen, die herstellbar sind, indem epoxidgruppenhaltige Verbindungen mit modifizierenden Verbindungen umgesetzt werden. Dabei ist aber stets darauf zu achten, daß die als (A)-Komponente eingesetzte Verbindung pro Molekül durchschnittlich mehr als 1,0 Epoxidgruppen enthält.

Als Beispiele für modifizierende Verbindungen werden genannt:
a) Carboxylgruppenhaltige Verbindungen wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, 2,2-Dimethylmalonsäure, Sebacinsäure, Hexahydrophthalsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkylpolyoxialkylenamine, wie N,N'-Dimethylpolyoxipropylendiamin, cyanalkylierte Alkylendiamine, wie Bis-N,N'-Cyanethylethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Bisphenol-A, Neopentylglykol, bisethoxiliertes Neopentylglykol, Hydroxipivalinsäureneopentylglykolester, Dimethylhydantoin-N,N'-diethanol, Hexandiol-1,6, Hexandiol-2,5, 1,4-Bis-(hydroximethyl)-cyclohexan, Trimethylolpropan, Pentaerythrit oder Aminoalkohole, wie Triethanolamin, Methyldiethanolamin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Als (A)-Komponente werden vorzugsweise epoxidgruppenhaltige Verbindungen eingesetzt, die erhältlich sind, indem eine epoxidgruppenhaltige Verbindung (α) mit einer gegenüber Epoxidgruppen monofunktionell reagierenden Verbindung (β) in einem solchen molaren Verhältnis umgesetzt wird, daß eine (A)-Komponente erhalten wird, die pro Molekül durchschnittlich mehr als 1,0, vorzugsweise 1,5 bis 3,0 Epoxidgruppen enthält, wobei (α) eine epoxidgruppenhaltige Verbindung ist, die pro Molekül durchschnittlich mehr als 1,5, vorzugsweise mehr als 1,8 Epoxidgruppen enthält oder eine Mischung aus solchen Verbindungen und (β) eine Verbindung ist, die eine alkoholische OH-, eine phenolische OH- oder eine SH-Gruppe im Molekül enthält oder eine Mischung aus solchen Verbindungen ist.

Die Umsetzung zwischen α und β kann sowohl in Substanz als auch in einem organichen Lösemittel oder einem Gemisch organischer Lösemittel durchgeführt werden. In der Regel ist es zweckmäßig, bei höheren Temperaturen wie z.B. 100 bis 195°C umzusetzen. Wenn die Umsetzung in Gegenwart von Katalysatoren, wie z.B. tertiären Aminen durchgeführt wird, kann es auch zu einer Reaktion der nach der Öffnung von Epoxidringen entstandenen sekundären Hydroxylgruppen mit Epoxidgruppen kommen (derartige Reaktionsprodukte sind in der DE-A-35 18 770 und DE-A-35 18 732 beschrieben). In diesen Fällen kann es notwendig sein, die Reaktion z.B. durch Absenken der Temperatur und/oder durch Inaktivierung des Katalysators abzubrechen, bevor das Reaktionsprodukt eine zu hohe Viskosität erreicht bzw. bevor ein vernetztes Reaktionsprodukt erhalten wird.

Als Beispiele für einsetzbare epoxidgruppenhaltige Verbindungen (α) werden aus Polyphenolen und Epihalohydrinen herstellbare Polyglycidylether, insbesondere Diglycidylether von Polyphenolen genannt. Als besonders bevorzugtes Polyphenol wird Bisphenol A genannt. Weitere geeignete Polyphenole sind Bisphenol F, Bis-(4-hydroxyphenyl)-1,1-ethan, Bis-(4-hydroxyphenyl)-1,1-isobutan, Bis(2-hydroxynaphtyl)methan und 1,5 Dihydroxynaphthalin.

Auch Polyglycidylether von aliphatischen oder cycloaliphatischen Polyolen, wie z.B. Polyetherpolyolen (Polymethylenoxid, Polyethylenoxid, Polypropylenoxid, Polyethylenoxid-co-propylenoxid, Polytetramethylenoxid), Ethylenglykol, Diethylenglykol, Triethylenglykol, 1,2-Propylenglykol, 1,4-Propylenglykol, Dipropylenglykol, Tripropylenglykol, Pentandiol, Hexantriol, Glycerin und Bis-(4-hydroxycyclohexyl-)-2,2-propan können als epoxidgruppenhaltige Verbindungen (α) eingesetzt werden.

Es können auch Polyglycidylester von Polycarbonsäuren, wie z.B. Oxalsäure, Bernsteinsäure, Glutarsäure, Terephthalsäure, 2,6-Naphthalindicarbonsäure und dimerisierte Linolsäure als epoxidgruppenhaltige Verbindungen (α) eingesetzt werden. Typische Beispiele sind Glycidyladipat und Glycidylphthalat.

Ferner sind als epoxidgruppenhaltige Verbindungen (α) auch Polyglycidylether von phenolischen Novolakharzen, Hydantoinepoxide und Polyepoxidverbindungen geeignet, die man durch Epoxidierung einer olefinisch ungesättigten Verbindungen erhält.

Als gegenüber Epoxidgruppen monofunktionell reagierende Verbindung (β) werden vorzugsweise Verbindungen mit einer phenolischen OH-Gruppe, besonders bevorzugt Alkylphenole, wie z.B. o-Kresol, m-Kresol, p-Kresol, t-Butylphenol, Nonylphenol, Dodecylphenol und Pentadecenylphenol eingesetzt.
Als Komponente (B) kann im Prinzip jede Verbindung, die sowohl eine gegenüber Epoxidgruppen reaktive Gruppe als auch mindestens eine Ketimin- oder Aldimingruppe im Molekül enthält oder eine Mischung aus solchen Verbindungen eingesetzt werden.

Die als Komponente (B) einsetzbaren Verbindungen sind erhältlich, indem Verbindungen (D), die sowohl eine gegenüber Epoxidgruppen reaktive Gruppe als auch mindestens eine primäre Aminogruppe im Molekül enthalten mit einem Keton, wie z.B. Aceton, Methylethylketon oder Methylisobutylketon oder einem Aldehyd, vorzugsweise mit einem Keton zu der ketimin- oder aldimingruppenhaltigen Komponente (B) umgesetzt werden. Diese Umsetzung wird vorzugsweise in einem organischen Lösemittel, wie z.B. Xylol, Toluol oder n-Hexan in der Hitze durchgeführt. Das Reaktionswasser wird üblicherweise durch azeotrope Destillation entfernt.

Als Beispiele für einsetzbare Komponenten (D) werden Verbindungen genannt, die sowohl eine Hydroxylgruppe, eine Mercaptogruppe oder eine sekundäre Aminogruppe als auch mindestens eine primäre Aminogruppe im Molekül enthalten, wie z.B. Ethanolamin, Mercaptoethanolamin, Diethylentriamin, Dipropylentriamin, Dibutylentriamin, N-Aminoethylpiperazin usw. (vgl. auch die in der US-A-4,017,438 genannten Verbindungen).

Als Komponente (B) werden vorzugsweise Verbindungen eingesetzt, die sowohl eine sekundäre Aminogruppe als auch mindestens eine Ketimin- oder Aldimingruppe im Molekül enthalten. Als Komponente (D) wird besonders bevorzugt Diethylentriamin eingesetzt.

Die Komponenten (A) und (B) müssen in einem solchen stöchiometrischen Verhältnis miteinander umgesetzt werden, daß das unvernetzte Zwischenprodukt (C) pro Molekül durchschnittlich noch mindestens eine Epoxidgruppe enthält, das heißt, die Komponente (B) muß in einer solchen Menge eingesetzt werden, daß von den in der Komponente (A) enthaltenen Epoxidgruppen nur so viele mit den in der Komponente (B) enthaltenen, gegenüber Epoxidgruppen reaktiven Gruppen umgesetzt werden können, daß das aus (A) und (B) gebildete unvernetzte Zwischenprodukt (C) pro Molekül durchschnittlich noch mindestens eine Epoxidgruppe enthält. Es ist bevorzugt, die Komponenten (A) und (B) in einem solchen stöchiometrischen Verhältnis miteinander umzusetzen, daß das Zwischenprodukt (C) pro Molekül durchschnittlich noch 1,0 bis 4,0, vorzugsweise 1,0 bis 2,0 Epoxidgruppen enthält, das heißt, daß es bevorzugt ist, die Komponente (B) in einer solchen Menge einzusetzen, daß von den in der Komponente (A) enthaltenen Epoxidgruppen nur so viele mit den in der Komponente (B) enthaltenen, gegenüber Epoxidgruppen reaktiven Gruppen umgesetzt werden können, daß das aus (A) und (B) gebildete unvernetzte Zwischenprodukt (C) pro Molekül durchschnittlich noch 1,0 bis 4,0, vorzugsweise 1,0 bis 2,0 Epoxidgruppen enthält.

Zur Herstellung der erfindungsgemäß eingesetzten vernetzten Polymermikroteilchen wird das unvernetzte Zwischenprodukt (C) in Gegenwart einer Brönsted-Säure in einem wäßrigen Medium dispergiert. Die Brönsted-Säure kann sowohl zum Zwischenprodukt (C) als auch in das wäßrige Medium gegeben werden.

Die Anwesenheit der Brönsted-Säure führt zu einer Protonierung von wenigstens einem Teil der im Endprodukt enthaltenen Aminogruppen. Die protonierten Aminogruppen stabilisieren die wäßrige Polymermikroteilchendispersion.

Die in dem erfindungsgemäßen Verfahren einsetzbaren wäßrigen Elektrotauchlacke enthalten neben den erfindungsgemäß eingesetzten vernetzten Polymermikroteilchen noch mindestens ein kathodisch abscheidbares Kunstharz als Bindemittel sowie gegebenenfalls mindestens ein Vernetzungsmittel, Pigmente, organische Lösemittel und übliche Additive.

Die erfindungsgemäß eingesetzten Elektrotauchlacke können im Prinzip jedes kathodisch abscheidbare Kunstharz enthalten. Das kathodisch abscheidbare Kunstharz ist vorzugsweise unvernetzt.

Die erfindungsgemäß eingesetzten Elektrotauchlacke enthalten vorzugsweise aminmodifizierte Epoxidharze als kathodisch abscheidbare Kunstharze.
Aminmodifizierte Epoxidharze sind bekannt (vgl. z.B. US-A-3,922,253, US-A-4,031,050, US-A-4,101,486, DE-A-35 18 770, DE-A-35 18 732, US-A-4,017,438, DE-A-27 010 02 und EP-B-4090) und sind herstellbar, indem die oben beschriebene Komponente (A) mit einer Komponente (E) umgesetzt wird.

Als Komponente (E) können primäre und/oder sekundäre Amine bzw. deren Salze und/oder Salze von tertiären Aminen verwendet werden, wobei die sekundären Amine besonders bevorzugte (E)-Komponenten sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u.dgl. geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen und Ketonen in bekannter Weise hergestellt.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die für die Wasserverdünnbarkeit und elektrische Abscheidung erforderlichen negative Ladungen können durch Protonierung mit wasserlöslichen Säuren (z.B. Borsäure, Ameisensäure, Milchsäure, bevorzugt Essigsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin u. dgl. Beispiele von anderen geeigneten Aminen sind in der US-PS 38 39 252 in Spalte 5, Zeile 3, bis Spalte 7, Zeile 42, angegeben.

Durch Umsetzung mit teilverkappten Polyisocyanaten können die aminmodifizierten Epoxidharze in selbstvernetzende Kunstharze überführt werden.

Bevorzugte Elektrotauchlacke sind Elektrotauchlacke, die als aminmodifizierte Epoxidharze Umsetzungsprodukte aus den Komponenten (A) und (E) enthalten, wobei die Komponente (A) herstellbar ist durch Umsetzung von
(i) einer Diepoxidverbindung oder eines Gemisches von Diepoxidverbindungen mit einem Epoxidäquivalentgewicht unter 2000 mit
(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190°C gegebenenfalls in Anwesentheit eines Katalysators durchgeführt wird (vgl. DE-OS-35 18 770).

Ebenfalls bevorzugte Elektrotauchlacke sind Elektrotauchlacke, die als aminmodifizierte Epoxidharze Umsetzungsprodukte aus den Komponenten (A) und (E) enthalten, wobei die Komponente (A) herstellbar ist durch eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS-35 18 732).

Die erfindungsgemäß eingesetzten Elektrotauchlacke enthalten vorzugsweise mindestens ein Vernetzungsmittel und/oder mindestens ein selbstvernetzendes kathodisch abscheidbares Kunstharz.

Als Vernetzungsmittel enthalten die erfindungsgemäß eingesetzten Elektrotauchlacke vorzugsweise mindestens ein blockiertes Polyisocyanat.

Als blockierte Polyisocyanate können übliche aliphatische, cycloaliphatische oder aromatische Di- oder Polyisocyanate, die mit bekannten Blockierungsmitteln, wie Alkoholen, Phenolen, Oximen, Lactamen, Alkanolaminen, sekundären Aminen oder aromatischen Alkoholen blockiert sind, eingesetzt werden.

Die Einarbeitung der erfindungsgemäß eingesetzten vernetzten Polymermikroteilchen in die Elektrotauchlacke ist unproblematisch. Die wäßrigen Polymermikroteilchendispersionen können zur Bindemitteldispersion, zur Pigmentpaste oder zum fertigen Elektrotauchlack gegeben werden.

Die erfindungsgemäß einzusetzenden Polymermikroteilchen werden üblicherweise in einer solchen Menge in die Elektrotauchlacke eingearbeitet, daß der Anteil an Polymermikroteilchen 0,5 bis 75 Gew.-%, vorzugsweise 1 bis 50 Gew.-%, besonders bevorzugt 2 bis 30 Gew.-%, bezogen auf den Gehalt an kathodisch abscheidbarem Kunstharz und gegebenenfalls vorhandenem Vernetzungsmittel, beträgt.

Der Feststoffgehalt der erfindungsgemäß eingesetzten Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 5 und 8, vorzugsweise zwischen 6,0 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt. Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung wäßriger Dispersionen der erfindungsgemäß eingesetzten venetzten Polymermikroteilchen

### 1.1 Herstellung einer Lösung von Diethylentriamindiketimin in Methylisobutylketon

Aus einer 70-gewichtsprozentigen Lösung von Diethylentriamin in Methylisobutylketon wird bei 110 - 140°C das Reaktionswasser azeotrop ausgekreist. Anschließend wird mit Methylisobutylketon verdünnt bis die Lösung ein Aminäquivalentgewicht von 129 aufweist.

### 1.2 Herstellung der Dispersion 1

In einem Reaktionsgefäß werden 1078 Teile eines Epoxidharzes auf Basis Bisphenol A mit einem EEW (Epoxidäquivalentgewicht) von 188, 392 Teile Bisphenol A, 150 Teile Dodecylphenol und 85 Teile Xylol vorgelegt und unter Stickstoffatmosphäre auf 130°C erwärmt. Nach Zugabe von 1,6 Teilen Triphenylphosphin wird nach kurzer exothermer Reaktion bei 130°C gehalten bis das Reaktionsgemisch ein EEW von 935 aufweist (ca. 1,5 Std.). Dann wird unter vorsichtiger Zugabe von 172 Teilen Methylisobutylketon auf 105°C abgekühlt. Danach werden 222 Teile der unter Punkt 1.1 beschriebenen Diethylentriamindiketiminlösung zugegeben. Nach dem Abklingen der durch die Reaktionswärme verursachten Erwärmung der Reaktionsmischung wird noch für 1 Stunde bei 115°C gehalten. Dann wird mit 115 Teilen Butylglykol und 185 Teilen sek. Butanol verdünnt und auf 82°C abgekühlt.

1600 Teile der so erhaltenen 82°C heißen Reaktionsmischung werden ohne weitere Abkühlung in eine Mischung aus 1576 Teilen entionisiertem Wasser und 27,6 Teilen Eisessig unter Rühren eingetragen. Dann wird noch 5 Minuten lang homogenisiert und innerhalb von einer Stunde mit 1333 Teilen entionisiertem Wasser portionsweise verdünnt. Anschließend werden die niedrigsiedenden Lösemittelbestandteile in einer Vakuumdestillation entfernt. Die so erhaltene Dispersion vernetzter Polymermikroteilchen weist einen Feststoffgehalt von 28,9 % (1 h, 130°C), einen Basengehalt von 0,705 und einen Säuregehalt von 0,462 Milliäquivalenten pro g Feststoff auf.

### 1.3 Herstellung der Dispersion 2

In einem Reaktionsgefäß werden 715 Teile eines Epoxidharzes auf Basis Bisphenol A mit einem EEW (Epoxidäquivalentgewicht) von 188, 260 Teile Bisphenol A, 100 Teile Dodecylphenol und 53 Teile Xylol vorgelegt und unter Stickstoffatmosphäre auf 130°C erwärmt. Nach Zugabe vor 1,1 Teilen Triphenylphosphin wird nach kurzer exothermer Reaktion bei 130°C gehalten bis das Reaktionsgemisch ein EEW von 940 aufweist (ca. 1,5 Std.). Dann werden 2,1 Teile N,N-Dimethylbenzylamin zugegeben, und die Reaktionsmischung wird weiter auf 130°C gehalten bis ein EEW von 1416 erreicht ist. Dann werden 958 Teile eines Polytetrahydrofurandiglycidylethers mit einem EEW von 420 (Grilonit F 713, Firma Ems Chemie) zusammer mit 29 Teilen Butylglykol zugegeben und es wird auf 105°C abgekühlt. Danach werden 281 Teile der unter Punkt 1.1 beschriebenen Diethylentriamindiketiminlösung zugegeben und noch für 1 Stunde bei 115°C gehalten. Anschließend wird die Reaktionsmischung auf 88°C abgekühlt.

1273 Teile der so erhaltenen 88°C heißen Reaktionsmischung werden ohne weitere Abkühlung in eine Mischung aus 953 Teilen entionisiertem Wasser und 31,2 Teilen Eisessig unter Rühren eingetragen. Dann wird noch 5 Minuten lang homogenisiert und innerhalb von einer Stunde mit 3965 Teilen entionisiertem Wasser portionsweise verdünnt. Anschließend werden die niedrigsiedenden Lösemittelbestandteile in einer Vakuumdestillation entfernt. Die so erhaltene Dispersion vernetzter Polymermikroteilchen weist einen Feststoffgehalt von 19 % (1 h, 130°C), einen Basengehalt von 0,818 und einen Säuregehalt von 0,245 Milliäquivalenten pro g Feststoff auf.

### 2. Darstellung von Vernetzungsmitteln

### 2.1 Vernetzungsmittel 1

In einem Reaktor, der mit einem Rührer, Rückflußkühler, Innenthermometer und Inertgaseinleitung ausgestattet ist, werden 1.133 g Toluylendiisocyanat (Mischung aus etwa 80 % 2,4- und 20 % 2,6-Isomeren) und 356 g Methylisobutylketon unter Stickstoffatmosphäre vorgelegt. Man gibt 0,7 g Dibutylzinndilaurat zu und trägt innerhalb von 4 Stunden 290 g Trimethylolpropan in Form kleiner Portionen in gleichen Zeitabständen ein. Die Kühlung wird so einreguliert, daß die Temperatur der Reaktionsmischung nicht über 45°C steigt.
30 min. nach Zugabe der letzten Portion Trimethylolpropan wird ein NCO-Äquivalentgewicht von 217 gemessen (bezogen auf Festanteile). Unter weiterer Kühlung läßt man nun innerhalb von einer Stunde 722 g n-Propylglykol zutropfen. Am Ende der Zugabe ist die Temperatur auf 86°C angestiegen. Man erwärmt nun auf 100°C und läßt eine weitere Stunde nachreagieren. Bei der anschließenden Kontrolle sind keine NCO-Gruppen mehr nachweisbar. Man kühlt nun ab und verdünnt mit 500 g Methylisobutylketon. Die Lösung dieses Polyurethanvernetzungsmittels hat einen Feststoffgehalt von 69,8 % (1 Std. bei 130°C gemessen).

### 2.2 Vernetzungsmittel 2

In einem Reaktor, wie er im vorstehenden Beispiel beschrieben ist, werden unter Stickstoffatmosphäre 1.146 g trimerisiertes Hexamethylendiisocyanat mit einem NCO-Äquivalentgewicht von 191 ("Basonat PLR 8638", Fa. BASF) und 339 g Methylisobutylketon unter Rühren auf 50°C erwärmt. Während 4 Std. werden nun 774 g Di-n-butylamin zugetropft. Die Temperatur wird dabei durch Kühlung unter 55°C gehalten. Die Vernetzungsmittellösung wird anschließend gekühlt und mit weiteren 141 g Methylisobutylketon verdünnt. Der Feststoffgehalt liegt bei 79,5 % (1 Std. bei 130°C gemessen).

### 3. Herstellung einer Bindemitteldispersion

In einem Reaktor werden 1698 Teile Epoxidharz auf Basis Bisphenol A mit einem EEW von 490 zusammen mit 227 Teilen Dodecylphenol und 101 Teilen Xylol unter Stickstoffatmosphäre auf 105°C aufgeheizt. Sobald die Schmelze klar ist werden durch azeotrope Rückflußdestillation im Vakuum Restwasserspuren mit Hilfe eines Wasserabscheiders innerhalb von 20 Min. entfernt. Sodann heizt man auf 130°C auf und gibt 3 Teile N,N-Dimethylbenzylamin zu. Man hält bei dieser Temperatur bis das EEW einen Wert von 1100 erreicht hat. Man gibt nun 126 Teile Butylglykol, 127 Teile Diethanolamin und 223 Teile Xylol zu und kühlt auf 90°C ab. Eine Stunde später verdünnt man mit 125 Teilen Propylenglykolphenylether und 317 Teilen Isobutanol und kühlt auf 60°C ab. Danach gibt man 40 Teile N,N-Dimethylaminopropylamin zu, erwärmt auf 90°C und hält 2 Std. bei dieser Temperatur. Anschließend kühlt man auf 70°C ab und gibt 280 Teile Plastilit 3060 (Polypropylenglykolverbindung, Fa. BASF), 805 Teile Vernetzungsmittel (Punkt 2.1) und 704 Teile Vernetzungsmittel (vgl. Punkt 2.2) zu, homogenisiert 20 Min. lang und überführt die Harzmischung in ein Dispergiergefäß. Dort gibt man 91,7 Teile Milchsäure (88 %ig) zu und verdünnt unter Rühren portionsweise mit 2112 Teilen entionisiertem Wasser. Anschließend wird 20 Min. lang homogenisiert bevor mit weiteren 3000 Teilen entionisiertem Wasser in kleinen Portionen weiterverdünnt wird.

Durch Destiallation im Vakuum werden die flüchtigen Lösemittel entfernt und anschließend mengengleich durch entionisiertes Wasser ersetzt. Die Dispersion hat folgende Kennzahlen:

| | |
|---|---|
| Feststoffgehalt: | 35 % (1 Std. bei 130°C) |
| Basengehalt: | 0,570 Milliäquivalente/g Festkörper |
| Säuregehalt: | 0,226 Milliäquivalente/g Festkörper |
| pH: | 6,2 |

### 4. Herstellung einer grauen Pigmentpaste

27,81 Teile Bisphenol A-diglycidylether, 1,44 Teile Xylol und5,81 Teile Bisphenol A werden in Gegenwart von 0,002 Teilen Triphenylphosphin bei 150 - 160°C bis zu einem EEW von 345 umgesetzt. Der Ansatz wird dann mit 21,61 Teilen Butylglykol verdünnt und auf 49°C gekühlt. Dann wird eine Mischung aus 7,77 Teilen 9-Amino-3.6-dioxanonan-1-ol und 4,07 Teilen N,N-Dimethylaminopropylamin innerhalb von 6 min. zugegeben, worauf die Temperatur auf 110°C steigt. Man hält die Mischung eine Stunde lang zwischen 110 und 115°C bevor 6,45 Teile Butylglykol zugegeben werden und der Ansatz auf 77°C gekühlt wird. Anschließend werden 14,9 Teile Nonylphenolglycidylether zugegeben. Die Temperatur steigt daraufhin auf 90°C an und wird dort eine Stunde lang gehalten, bevor mit 10,03 Teilen Butylglykol verdünnt und gekühlt wird. Der Feststoffgehalt der dünnflüssigen Harzlösung liegt bei 60 %.

Zur Herstellung der Pigmentpaste werden zunächst 29,33 Teile Wasser, 1,59 Teile Essigsäure (90 %ig) und 21,60 Teile der vorstehend beschriebenen Harzlösung vorgemischt. Nun werden 0,7 Teile Entschäumer¹⁾, 0,5 Teile Ruß, 4,8 Teile basisches Bleipigment, 6,75 Teile Extender HEWP²⁾, 32,48 Teile Titandioxid (R 900) und 2,25 Teile Dibutylzinnoxid zugegeben, und die Mischung wird 30 min. lang unter einem schellaufenden Dissolverrührwerk vordispergiert. Anschließend wird die Mischung in einer Laborkleinmühle (Motor Mini Mill, Eiger Engineering Ltd. Great Britain) während 1 bis 1,5 Std. bis zu einer Hegmann-Feinheit von kleiner/gleich 12 dispergiert und mit weiterem Wasser auf Verarbeitungsviskosität eingestellt.
Es resultiert eine sehr entmischungsstabile Pigmentpaste.
¹⁾ "Tristar Antifoam" Tristar Chemical Co. Dallas, USA
²⁾ English China Clay Int. Great Britain

### 5. Zubereitung von Elektrotauchlacken und Abscheidung von Lackfilmen

1925 Teile der Bindemitteldispersion gemäß Punkt 3 werden mit 2500 Teilen entionisiertem Wasser und 3 Teilen 10 %iger Essigsäure verdünnt. In die so verdünnte Bindemitteldispersion werden 572 Teile der Pigmentpaste gemäß Punkt 4 sowie die in der folgenden Tabelle angegebenen Mengen an Polymermikroteilchendispersion 1 bzw. 2 (vgl. Punkt 1.2 und 1.3) eingetragen.

| Elektrotauchlack | zugegebene Polymermikroteilchendispersion gemäß Pkt. | Menge |
|---|---|---|
| 1 | 1.2 | 173 |
| 2 | 1.2 | 346 |
| 3 | 1.3 | 526 |
| 4 (Vergleich) | - | - |

Man läßt die Elektrotauchlacke 5 Tage bei Raumtemperaßtur unter Rühren altern. Die Abscheidung der Lackfilme erfolgt während 2 min bei der angegebenen Spannung auf kathodisch geschalteten Stahlprüftafeln. Die Badtemperatur wird hierbei auf 27°C gehalten. Die abgeschiedenen Naßfilme werden mit entionisiertem Wasser nachgespült und während 20 min. bei 165°C eingebrannt. Die so erhaltenen Lackfilme wurden geprüft. Die Prüfergebnisse sind in der folgenden Tabelle zusammengestellt:

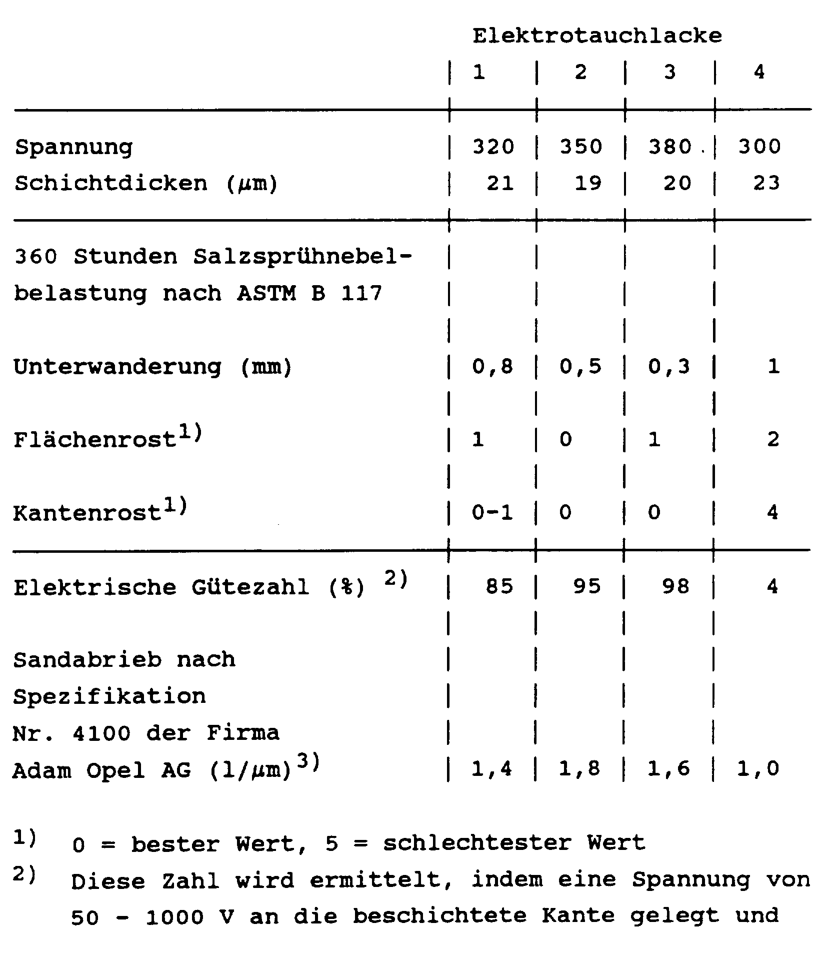

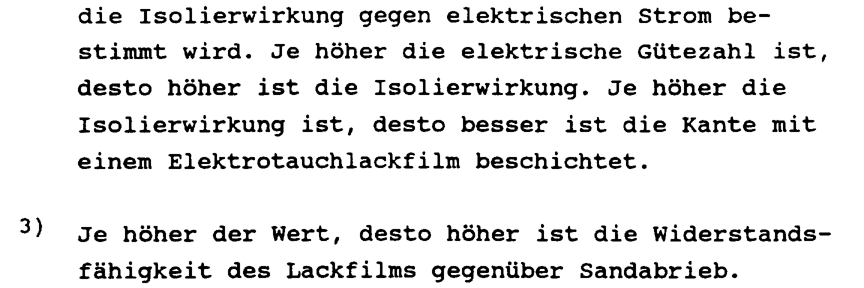

Die oben dargelegten Versuchsergebnisse zeigen, daß mit Elektrotauchlacken, die die erfindungsgemäß eingesetzten Polymermikroteilchen enthalten, Lackfilme hergestellt werden können, die nicht nur die Kanten des lackierten Substrats besser abdecken, sondern die auch überraschenderweise eine verbesserte Korrosionsschutzwirkung und eine verbesserte Widerstandsfähigkeit gegenüber Sandabrieb aufweisen.

## Patentansprüche

1. Verfahren zum Lackieren elektrisch leitfähiger Substrate, bei dem
(1) das elektrisch leitfähige Substrat in einen wäßrigen Elektrotauchlack, der mindestens ein kathodisch abscheidbares Kunstharz und vernetzte Polymermikroteilchen enthält, getaucht wird
(2) das Substrat als Kathode geschaltet wird
(3) durch Gleichstrom ein Film auf dem Substrat abgeschieden wird
(4) das lackierte Substrat aus dem Elektrotauchlack entfernt wird und
(5) der abgeschiedene Lackfilm eingebrannt wird,
dadurch gekennzeichnet, daß die im wäßrigen Elektrotauchlack enthaltenen vernetzten Polymermikroteilchen herstellbar sind, indem
(A) eine Verbindung, die pro Molekül durchschnittlich mehr als 1,0 Epoxidgruppen enthält oder eine Mischung aus solchen Verbindungen und
(B) eine Verbindung, die sowohl eine gegenüber Epoxidgruppen reaktive Gruppe als auch mindestens eine Ketimin- oder Aldimingruppe im Molekül enthält oder eine Mischung aus solchen Verbindungen zu einem unvernetzten Zwischenprodukt (C), das pro Molekül durchschnittlich noch mindestens eine Epoxidgruppe enthält, umgesetzt werden und dieses Zwischenprodukt in Gegenwart einer Brönsted-Säure in einem wäßrigen Medium dispergiert wird.

2. Wäßrige Elektrotauchlacke, die mindestens ein kathodisch abscheidbares Kunstharz und vernetzte Polymermikroteilchen enthalten, dadurch gekennzeichnet, daß die vernetzten Polymermikroteilchen herstellbar sind, indem
(A) eine Verbindung, die pro Molekül durchschnittlich mehr als 1,0 Epoxidgruppen enthält oder eine Mischung aus solchen Verbindungen und
(B) eine Verbindung, die sowohl eine gegenüber Epoxidgruppen reaktive Gruppe als auch mindestens eine Ketimin- oder Aldimingruppe im Molekül enthält oder eine Mischung aus solchen Verbindungen
zu einem unvernetzten Zwischenprodukt (C), das pro Molekül durchschnittlich noch mindestens eine Epoxidgruppe enthält, umgesetzt werden und dieses Zwischenprodukt in Gegenwart einer Brönsted-Säure in einem wäßrigen Medium dispergiert wird.

3. Verfahren oder Elektrotauchlacke nach Anspruch 1 oder 2, dadurch gekennzeichnet, daß die Komponente (A) pro Molekül durchschnittlich 1,5 bis 3,0 Epoxidgruppen enthält.

4. Verfahren oder Elektrotauchlacke nach einem der Ansprüche 1 bis 3, dadurch gekennzeichnet, daß die Komponente (B) eine Verbindung ist, die sowohl eine sekundäre Aminogruppe als auch mindestens eine Ketimingruppe im Molekül enthält.

5. Verfahren oder Elektrotauchlacke nach einem der Ansprüche 1 bist 4, dadurch gekennzeichnet, daß das unvernetzte Zwischenprodukt (C) pro Molekül durchschnittlich noch 1,0 bis 4,0, vorzugsweise 1,0 bis 2,0 Epoxidgruppen enthält.

6. Verfahren zur Herstellung einer wäßrigen Dispersion vernetzter Polymermikroteilchen, dadurch gekennzeichnet, daß
(A) eine Verbindung, die pro Molekül durchschnittlich mehr als 1,0 Epoxidgruppen enthält oder eine Mischung aus solchen Verbindungen und
(B) eine Verbindung, die sowohl eine gegenüber Epoxidgruppen reaktive Gruppe als auch mindestens eine Ketimin- oder Aldimingruppe im Molekül enthält oder eine Mischung aus solchen Verbindungen
zu einem unvernetzten Zwischenprodukt (C), das pro Molekül durchschnittlich noch mindestens eine Epoxidgruppe enthält, umgesetzt werden und dieses Zwischenprodukt in Gegenwart einer Brönsted-Säure in einem wäßrigen Medium dispergiert wird.

7. Verfahren nach Anspruch 6, dadurch gekennzeichnet, daß die Komponente (A) pro Molekül durchschnittlich 1,5 bis 3,0 Epoxidgruppen enthält.

8. Verfahren nach Anspruch 6 oder 7, dadurch gekennzeichnet, daß die Komponente (B) eine Verbindung ist, die sowohl eine sekundäre Aminogruppe als auch mindestens eine Ketimingruppe im Molekül enthält.

9. Verfahren nach einem der Ansprüche 6 bis 8, dadurch gekennzeichnet, daß das unvernetzte Zwischenprodukt (C) pro Molekül durchschnittlich noch 1,0 bis 4,0, vorzugsweise 1,0 bis 2,0 Epoxidgruppen enthält.

10. Wäßrige Dispersionen vernetzter Polymermikroteilchen, dadurch gekennzeichnet, daß sie nach einem der Ansprüche 6 bis 9 herstellbar sind.

## Claims

1. Method of coating electrically conductive substrates, in which
(1) the electrically conductive substrate is immersed in an aqueous electrodeposition paint which contains at least one cathodically depositable synthetic resin and crosslinked polymer microparticles,
(2) the substrate is connected as cathode,
(3) a film is deposited by direct current on the substrate,
(4) the coated substrate is removed from the electrodeposition paint, and
(5) the deposited paint film is baked,
characterized in that the crosslinked polymer microparticles contained in the aqueous electrodeposition paint can be prepared by reacting
(A) a compound which contains on average more than 1.0 epoxide group per molecule, or a mixture of such compounds, and
(B) a compound which contains not only a group reactive towards epoxide groups but also at least one ketimine or aldimine group in the molecule, or a mixture of such compounds
to give a non-crosslinked intermediate product (C), which still contains on average at least one epoxide group per molecule, and dispersing this intermediate product in the presence of a Brönsted acid in an aqueous medium.

2. Aqueous electrodeposition paints, containing at least one cathodically depositable synthetic resin and crosslinked polymer microparticles, characterized in that the crosslinked polymer microparticles can be prepared by reacting
(A) a compound which contains on average more than 1.0 epoxide group per molecule, or a mixture of such compounds, and
(B) a compound which contains not only a group reactive towards epoxide groups but also at least one ketimine or aldimine group in the molecule, or a mixture of such compounds
to give a non-crosslinked intermediate product (C), which still contains on average at least one epoxide group per molecule, and dispersing this intermediate product in the presence of a Brönsted acid in an aqueous medium.

3. Method or electrodeposition paints according to Claim 1 or 2, characterized in that component (A) contains on average 1.5 to 3.0 epoxide groups per molecule.

4. Method or electrodeposition paints according to one of Claims 1 to 3, characterized in that component (B) is a compound which contains both a secondary amino group and at least one ketimine group in the molecule.

5. Method or electrodeposition paints according to one of Claims 1 to 4, characterized in that the non-crosslinked intermediate product (C) still contains on average 1.0 to 4.0 epoxide groups, preferably 1.0 to 2.0 epoxide groups, per molecule.

6. Process for the preparation of an aqueous dispersion of crosslinked polymer microparticles, characterized in that
(A) a compound which contains on average more than 1.0 epoxide group per molecule, or a mixture of such compounds, and
(B) a compound which contains both a group which is reactive towards epoxide groups and at least one ketimine or aldimine group in the molecule, or a mixture of such compounds,
are reacted to give a non-crosslinked intermediate product (C) which still contains on average at least one epoxide group per molecule, and this intermediate product is dispersed in an aqueous medium in the presence of a Brönsted acid.

7. Process according to Claim 6, characterized in that component (A) contains on average 1.5 to 3.0 epoxide groups per molecule.

8. Process according to Claim 6 or 7, characterized in that component (B) is a compound which contains both a secondary amino group and at least one ketimine group in the molecule.

9. Process according to one of Claims 6 to 8, characterized in that the non-crosslinked intermediate product (C) still contains on average 1.0 to 4.0 epoxide groups, preferably 1.0 to 2.0 epoxide groups, per molecule.

10. Aqueous dispersions of crosslinked polymer microparticles, characterized in that they can be prepared according to one of Claims 6 to 9.

## Revendications

1. Procédé de laquage de substrats électro-conducteurs, lors duquel
(1) l'on immerge le substrat électro-conducteur dans une laque de trempage électrophorétique, qui contient au moins une résine susceptible d'être déposée à la cathode et des microparticules polymères réticulées,
(2) l'on branche le substrat en tant que cathode,
(3) l'on dépose à l'aide d'un courant continu un film sur le substrat,
(4) l'on retire le substrat laqué du bain de laque de trempage électrophorétique et
(5) l'on procède à la cuisson du film de laque déposé,
caractérisé en ce que les microparticules polymères réticulées contenues dans le bain de laque de trempage électrophorétique peuvent être fabriquées en ce que l'on fait réagir
(A) un composé, qui contient par molécule en moyenne plus de 1,0 groupements époxydes ou un mélange de tels composés et
(B) un composé, qui contient non seulement un groupement réactif vis-à-vis des groupements époxydes mais aussi au moins un groupement cétimine ou aldimine dans la molécule ou un mélange de tels composés
pour former un produit intermédiaire (C) non réticulé, qui contient par molécule en moyenne encore au moins un groupement époxyde, et en ce que l'on procède à la mise en dispersion dans un milieu aqueux de ce produit intermédiaire en présence d'un acide de Brönsted.

2. Laques de trempage électrophorétique aqueuses, qui contiennent au moins une résine susceptible d'être déposée à la cathode et des microparticules polymères réticulées, caractérisées en ce que les microparticules polymères réticulées peuvent être fabriquées en ce que l'on fait réagir
(A) un composé, qui contient par molécule en moyenne plus de 1,0 groupements époxydes ou un mélange de tels composés et
(B) un composé, qui contient non seulement un groupement réactif vis-à-vis des groupements époxydes mais aussi au moins un groupement cétimine ou aldimine dans la molécule ou un mélange de tels composés
pour former un produit intermédiaire (C) non réticulé, qui contient par molécule en moyenne encore au moins un groupement époxyde, et en ce que l'on procède à la mise en dispersion dans un milieu aqueux de ce produit intermédiaire en présence d'un acide de Brönsted.

3. Procédé ou laque de trempage électrophorétique selon la revendication 1 ou 2, caractérisé en ce que le composant (A) contient en moyenne par molécule de 1,5 à 3,0 groupements époxydes.

4. Procédé ou laque de trempage électrophorétique selon l'une quelconque des revendications 1 à 3, caractérisé en ce que le composant (B) est un composé, qui contient dans la molécule non seulement un groupement amino secondaire mais aussi au moins un groupement cétimine.

5. Procédé ou laque de trempage électrophorétique selon l'une quelconque des revendications 1 à 4, caractérisé en ce que le produit intermédiaire non réticulé (C) contient par molécule en moyenne encore de 1 à 4,0, de préférence de 1,0 à 2,0 groupements époxydes.

6. Procédé de fabrication d'une dispersion aqueuse de microparticules polymères réticulées, caractérisé en ce que l'on fait réagir
(A) un composé, qui contient par molécule en moyenne plus de 1,0 groupements époxydes ou un mélange de tels composés et
(B) un composé, qui contient non seulement un groupement réactif vis-à-vis des groupements époxydes mais aussi au moins un groupement cétimine ou aldimine dans la molécule ou un mélange de tels composés
pour former un produit intermédiaire (C) non réticulé, qui contient par molécule en moyenne encore au moins un groupement époxyde, et en ce que l'on procède à la mise en dispersion dans un milieu aqueux de ce produit intermédiaire en présence d'un acide de Brönsted.

7. Procédé selon la revendication 6, caractérisé en ce que le composant (A) contient par molécule en moyenne de 1,5 à 3,0 groupements époxydes.

8. Procédé selon la revendication 6 ou 7, caractérisé en ce que le composant (B) est un composé qui contient non seulement un groupement amino secondaire mais aussi au moins un groupement cétimine dans la molécule.

9. Procédé selon l'une quelconque des revendications 6 à 8, caractérisé en ce que le produit intermédiaire non réticulé (C) contient par molécule en moyenne encore de 1,0 à 4,0, de préférence de 1,0 à 2,0 groupements époxydes.

10. Dispersions aqueuses de microparticules polymères réticulées, caractérisées en ce qu'elles peuvent être fabriquées selon l'une quelconque des revendications 6 à 9.
